# EUROPEAN PATENT APPLICATION

(11) **EP 1 039 180 A1**
(43) Date of publication of application: **27.09.2000**
(21) Application number: 00302173.0
(22) Date of filing: 17.03.2000
(51) Int. Cl.: F16H 61/21, F16H 59/06, F16H 59/30

(54) **A control system for providing engine braking in a vehicle with a continuously variable transmission**

(30) Priority: 20.03.1999 GB 9906390; 20.03.1999 GB 9906362
(71) Applicant: ROVER GROUP LIMITED, Warwick, Warwickshire CV34 6RG (GB)
(72) Inventor: Wood, Anthony, Cheltenham, Gloucestershire GL51 0TL (GB); Miller, Christopher James, Evesham, Worcestershire WR11 6YF (GB)
(74) Representative: Bullwein, Fritz

(57) **Abstract**

A vehicle (10) is disclosed which comprises an engine (12) coupled to a transmission (14) and a control means (20) arranged during use to change a drive ratio of the transmission in a continuously variable manner and also to change the drive ratio in response to a manually operable drive ratio shift request means (22; DS, US). The control means (20) is further arranged during use, in response to a manually requested down-shift (DS), to assess the circumstances under which said down-shift was requested and to implement automatically a drive ratio control strategy in which said drive ratio is controlled such that a level of engine braking is provided which is appropriate to said circumstances.

## Description

This invention relates to vehicles and in particular to a vehicle having the features of the pre-characterising portion of Claim 1. The invention also relates to a control system suitable for such a vehicle.

It is known to provide a vehicle with a transmission control system to control the operation of a continuously variable transmission (CVT) by varying its drive ratio in a continuous manner. An increase in drive ratio causes a decrease in road speed for a given engine speed and a decrease in drive ratio causes an increase in road speed for a given engine speed. It is a known disadvantage of equipping a vehicle with a CVT that, because the drive ratio is varied in a continuous manner, there is very little engine braking to assist deceleration.

In US 5,527,231 a system is disclosed which detects an overrun condition and provides for a continuous increase in transmission ratio while the brakes are being operated, so as to provide engine braking on overrun to reduce the stress on the service brakes.

In US 5,527,232 a system is disclosed which detects an overrun condition and fixes the transmission ratio at the value it possessed on commencement of overrun, for example, when the accelerator pedal is released on entry to a bend. This system prevents a decrease in transmission ratio during overrun but provides only limited engine braking ability.

In PCT/GB98/02831 an arrangement is disclosed in which a user can operate a vehicle in a hybrid mode, in which a user can be in greater personal control over the level of engine braking implemented. On successively pressing a downshift button while operating a CVT in a continuous manner, successive stepped downshifts are made by a controller which adopts the next lowest simulated gear on each press. Using this arrangement, some users might find that the next lowest gear may in some circumstances provide a level of engine braking which is for them at perhaps too high or too low a level. It may even be that the next lowest gear cannot be selected because its selection might compromise an engine over-speed protection strategy.

It is an object of this invention to provide an improved vehicle and also to provide an improved control system therefor.

Accordingly, the invention provides a vehicle comprising an engine coupled to a transmission and a control means arranged during use to change a drive ratio of the transmission in a continuously variable manner and also to change the drive ratio in response to a manually operable drive ratio shift request means, characterised in that the control means is further arranged during use, in response to a manually requested down-shift, to assess the circumstances under which said down-shift was requested and to implement automatically a drive ratio control strategy in which said drive ratio is controlled such that a level of engine braking is provided which is appropriate to said circumstances.

Said drive ratio control strategy may be implemented by selection from a plurality of drive ratio control strategies. A said drive ratio control strategy may comprise a light deceleration strategy. Said light deceleration strategy may include varying said drive ratio as necessary to hold engine speed substantially constant until vehicle speed has been brought down by engine braking to a point around which vehicle speed and engine speed match a suitable point in a drive ratio operating characteristic of the next lowest gear for the operating characteristic of that next lowest gear to be implemented.

Said control means may be arranged to implement said light deceleration strategy when a said stepped down-shift is manually requested if it determines that said engine is under light fuelling conditions and said vehicle is not accelerating and is not being held at a steady state cruising speed.

Said control means may be arranged to implement said light deceleration strategy when a said stepped down-shift is manually requested if it determines that said engine is under light fuelling conditions and said control means determines whether said engine is operating under light fuelling conditions by monitoring at least one of a manifold absolute pressure transducer, an accelerator position transducer and an air flow meter and comparing the monitored reading or readings thereof with light fuelling readings stored in a memory map.

A said drive ratio control strategy may comprise a maximum engine braking strategy. Said maximum engine braking strategy may include varying said drive ratio as necessary to achieve an engine speed which provides a level of engine braking determined to be substantially the maximum which is available and/or safe and/or desired and holding that engine speed substantially constant until vehicle speed has been brought down by engine braking to a point around which vehicle speed and engine speed match a suitable point in an operating characteristic of the next lowest gear for the operating characteristic of that next lowest gear to be implemented.

Said maximum engine braking strategy may be implemented by increasing said drive ratio in steps until a drive ratio is reached which is one step below a drive ratio at which said engine would exceed a predetermined engine speed limit.

An engine braking strategy may be adopted only if at least one of engine speed, vehicle speed or the speed of a drive shaft is above a predetermined threshold, so as to reduce the likelihood of engine staffing if a said manual stepped downshift is carried out.

Said maximum engine braking strategy may be implemented only if said engine is being operated under over-run-fuel-cut-off (ORFCO) conditions.

The invention also provides a control system suitable for a vehicle comprising an engine coupled to a transmission, and a control means which is arranged during use to change a drive ratio of the transmission in a continuously variable manner and also to change the drive ratio in response to a manually operable drive ratio shift request means, the system being characterised in that said control means is further arranged during use, in response to a manually requested down-shift, to assess the circumstances under which said down-shift was requested and to implement automatically a drive ratio control strategy in which said drive ratio is controlled such that a level of engine braking is provided which is appropriate to said circumstances.

The invention will now be described by way of example only and with reference to the accompanying drawings, in which:

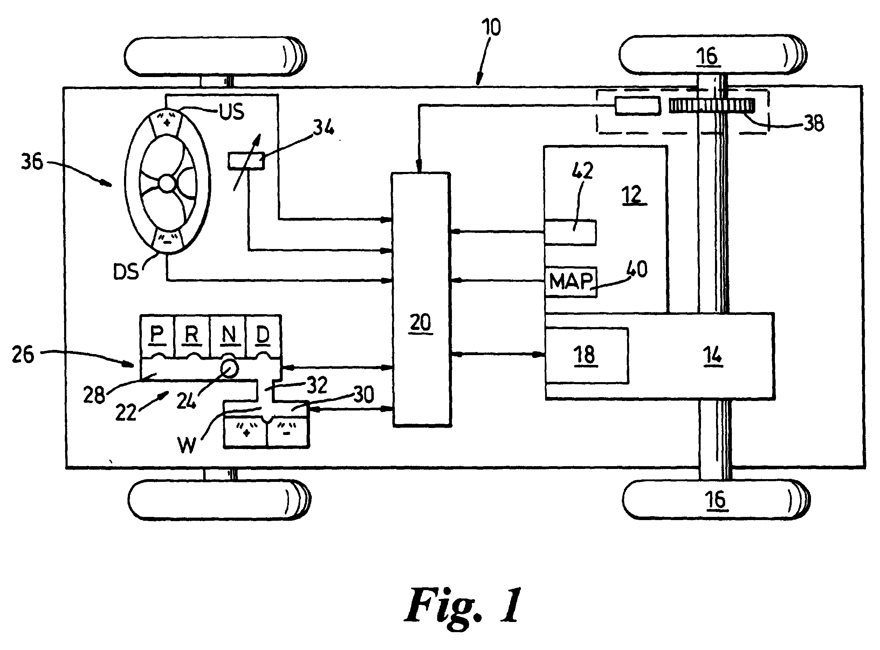

Figure 1 is a schematic diagram of a vehicle according to the invention;

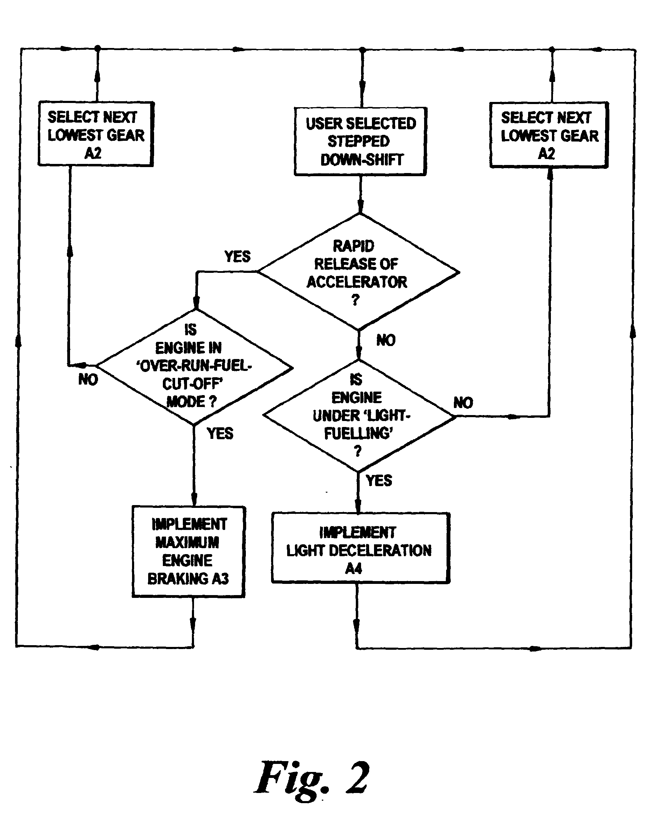

Figure 2 is a flow chart of a control process of the vehicle of Figure 1; and
Figure 3 is a graphic representation of a manner in which a transmission of the vehicle of Figure 1 changes its output ratio in accordance with the control process of Figure 2.

Referring to the figures, a vehicle 10 comprises an internal combustion engine 12 connected to a continuously variable transmission (CVT) 14 which provides drive to a set of wheels 16. The drive ratio of the CVT 14 is varied by a drive ratio varying mechanism 18 which is under the control of a controller 20.

The controller 20 can operate in a continuous mode in which the drive ratio is varied in a substantially continuous manner or can operate in a stepped mode in which the drive ratio can be changed in steps between a plurality of substantially fixed ratios. The continuously variable nature of operation of the CVT 14 makes it difficult to permanently fix the CVT output at specific drive ratios and the controller 20 simulates fixed ratios by continuously adjusting the ratio varying mechanism 18 to operate along substantially fixed ratios within the CVT output characteristic.

The controller 20 receives inputs from a transmission selector 22, having a user operated selector lever 24 manually slideable between positions along a transmission gate 26 and which provides the controller 20 with a signal indicating in which one of the positions the selector lever 24 has been placed. The gate 26 is divided into a first track 28 and a second track 30 which are interconnected by a cross track 32.

When moved along the first track 28, the selector lever 24 is moved between the positions for park P, reverse R, neutral N and drive D. When the selector lever 24 is in these positions P, R, N, D the controller 20 operates in its continuous mode and increases or decreases the drive ratio in a continuous manner. From the drive position D, the selector lever 24 can be moved across the cross track 32 and into the second track 30.

When the selector lever 24 is in the second track 30, it is spring loaded to a waiting position W between an up-shift "+" and a down-shift "-" position. The selector lever 24 is manually movable into the up-shift "+" or down-shift "-" position and is returned to the waiting position W by the spring loading on its release between movements.

When the selector lever 24 is in the second track 30, the controller 20 controls the varying mechanism 18 to operate the CVT in the simulated fixed ratios, conveniently referred to as operation in stepped mode. To decrease the transmission ratio from one simulated fixed ratio to another, the selector lever 24 is moved into the up-shift "+" position and this operation is known as a stepped up-shift and puts the vehicle 10 into a higher (simulated) gear. To increase the drive ratio from one simulated fixed ratio to another, the selector lever 24 is moved into the down-shift "-"position and this operation is known as a stepped down-shift and puts the vehicle 10 into a lower (simulated) gear.

The controller 20 also receives a signal TPS from an accelerator pedal position and angle sensor 34 which indicates the level of acceleration demanded by a user to be applied to the wheels 16. The accelerator signal TPS is indicative of the rate of change of accelerator movement and its position within its full scale deflection from fully-off to fully-on.

The vehicle 10 further comprises a steering wheel 36 which has an up-shift button US and a down-shift button DS mounted on it. The buttons US, DS are both connected to the controller 20 and are enabled when the selector lever 24 is in the waiting position W, so as to operate in parallel within the stepped up-shifts and stepped down-shift made using the selector lever 24.

The buttons US, DS allow the user to make manually selected stepped up-shifts and stepped down-shifts without having to let go of the steering wheel 36 to operate the selector lever 24 in the second track 30. It would be possible to provide different arrangements of manually operated up-shift and down-shift controls such as, for example, a twist grip gear change mounted on the steering wheel, paddle-type levers on the steering controls or a floor mounted switch arrangement.

The controller 20 also receives a vehicle speed signal from a drive shaft speed transducer assembly 38, a manifold depression signal from a manifold absolute pressure (MAP) transducer 40 and an engine speed signal from an engine speed transducer 42.

When the selector lever 24 is in drive D, the controller 20 varies the drive ratio of the CVT 14 in a continuous manner to provide optimum torque to the wheels 16 to accelerate the vehicle 10 at its optimum rate, while operating the engine 12 at its peak power or peak torque point as appropriate and already known from existing CVT techniques. The rate of acceleration and engine performance is dictated by the TPS signal.

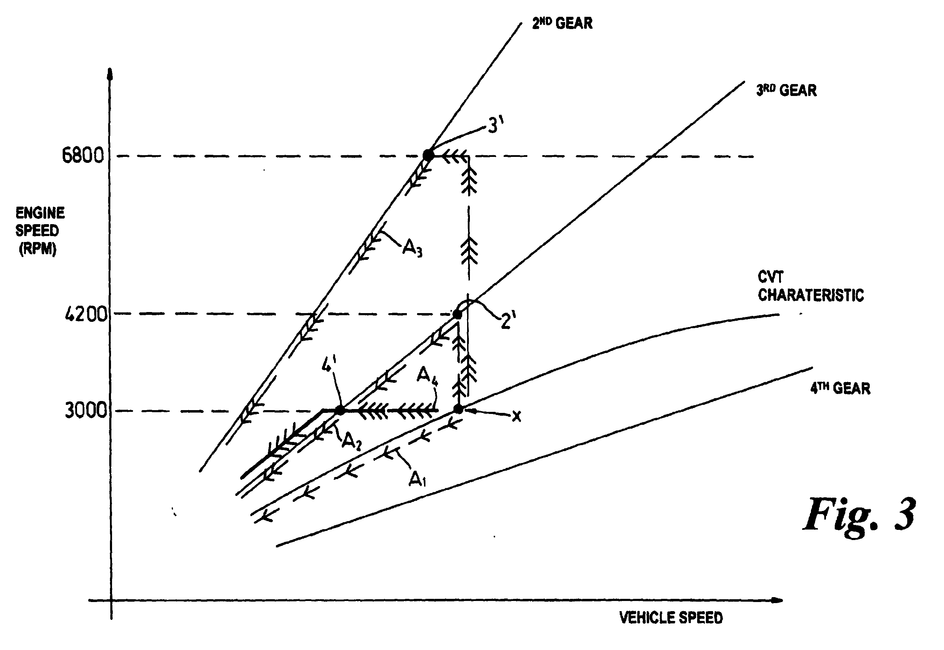

When the selector lever 24 is in drive D and the accelerator pedal is released, the controller 20 starts to decrease the transmission ratio in a continuous manner in similar fashion to a conventional CVT, which provides very little engine braking and is represented by the single arrow A₁ in Figure 3. When the CVT 14 is being operated in its stepped mode, however, it is possible for a user to reduce the drive ratio in steps so as to benefit from engine braking.

The CVT 14 of this embodiment can also be operated in a hybrid mode in which the drive ratio is decreased in steps whilst retaining the benefit of accelerating in a continuous fashion. Operation in the hybrid mode involves a user making one or more stepped down-shifts using the down-shift button DS for the sake of engine braking but, when he accelerates, the vehicle 10 accelerates only in the continuous mode. For a detailed description of operation in the hybrid mode, the reader is referred to PCT/GB98/02831, the disclosure of which is incorporated herein by way of reference.

This invention relates to the manner in which the CVT 14 is moved down (simulated) gears when operating in stepped mode and also to the manner in which it moves from operation in the continuous mode into the hybrid mode.

When the driver selects a stepped down-shift either by using the selector lever 24 in the second track 30 or by pressing the down-shift button DS so as to enter the hybrid mode, the controller 20 assesses the circumstances under which the stepped down-shift was requested and adopts or holds a drive ratio automatically in which a level of engine braking appropriate to the circumstances is implemented. These circumstances may reflect the particular driving style or driving situation. At all times, however, precautions are taken to reduce the likelihood that the engine 12 might exceed its engine revolution speed limit ("rev' limit"). This aspect of the invention can best be understood by referring in particular to Figure 3.

The reader is asked to assume that the CVT 14 has a current operating point "x" which lies on a (continuous) CVT characteristic, somewhere between 3rd and 4th (simulated) gears and with the engine 12 in this example being operated at 3000 revolutions per minute (RPM).

If the user simply lifts of the accelerator, the vehicle 10 decelerates in normal CVT fashion down the CVT characteristic curve as indicated by the single arrow drive ratio control strategy A₁.

If a user presses the down shift button DS, whether or not he has also lifted off the accelerator, in normal hybrid mode (as disclosed in PCT/GB98/02831) the controller 20 moves the drive ratio to the next lowest gear. In the example shown in Figure 3, the way that the CVT 14 enters hybrid mode in its normal fashion is by moving away from operation along the CVT characteristic at x and into operation in 3rd gear, which it meets at a point 2' which is at say 4200 RPM. The vehicle 10 then starts to decelerate with engine braking assistance down the 3rd gear slope all in accordance with the double arrow drive ratio control strategy A₂.

A modification to the system of PCT/GB98/02831 which is provided by this invention, is the manner in which the entry conditions to the hybrid mode are assessed and the modifications which are thereby possible to the manner in which the controller 20 moves the ratio away from the CVT characteristic and into operation in a fixed ratio. In addition to the way of entering hybrid mode disclosed in PCT/GB98/02831, two further ways are now disclosed. It should be noted, however, that these two techniques are also applicable in similar fashion to moving down simulated gears when operating the CVT 14 in its fully stepped mode.

When a user selects a stepped downshift around the time when he lifts off the accelerator, the controller 20 determines whether the accelerator was released rapidly. What actually defines whether a release is rapid or not will depend on tuning and development testing, along with marketing considerations, and is therefore largely up to a manufacturer to decide. A user might choose to set his own definition, which could be programmed in by a servicing agent using a diagnostic aid.

A rapid release might, for example, indicate that the user was lifting off the accelerator during a rapid approach to a hazard, e.g. a roundabout or a sharp bend in the road. Under these sort of conditions, the user might like to have as high a level of engine braking available as possible. If the release is rapid, the controller 20 looks to see if the release was rapid enough to send engine control into an over-run-fuel-cut-off mode (ORFCO).

If accelerator release was rapid and the engine 12 is not in ORFCO, then the controller 20 steps the CVT 14 down into the next lowest gear, in accordance with the double arrow A₂ in similar fashion to operation in the hybrid mode of PCT/GB98/02831.

The engine 12 goes into ORFCO if, for example, the TPS signal from the accelerator position sensor 34 indicates that the accelerator has been released and if the signal from the map transducer 40 indicates that manifold depression is high. In ORFCO, the fuel injectors (not shown) of the engine 12 are switched off and the engine 12 acts as an air pump so that fuel is saved and emissions are not unnecessarily increased.

If the engine 12 is in ORFCO, the controller 20 assesses the signal from the vehicle speed transducer 38 with respect to the currently implemented drive ratio and if the drive shaft speed is below a predetermined limit (stall speed) at which use of engine braking might cause the engine speed to fall to a level which might cause engine stalling, the controller 20 does not make a stepped down-shift. Such a drive shaft stall speed may equate to, for example, a vehicle speed of 0.8 kph. The controller 20 could, instead or in addition to the drive shaft speed, consider a comparison between current drive ratio and a direct measurement of vehicle road speed or engine speed in order to determine whether carrying out a stepped down-shift might stall the engine 12.

If the engine 12 is in ORFCO and the vehicle speed is above the stall speed, the controller 20 compares the current engine speed signal from the transducer 42 with a pre-set engine speed limit (rev' limit) which is set at a level which prevents engine damage and this limit is shown by way of example as 6800 RPM. If the engine speed is less than the engine speed limit (rev limit) then the drive ratio is increased, i.e. a stepped down-shift is made to a drive ratio in which the maximum engine braking effect available is provided, so long as making that stepped down-shift will not over speed the engine 12.

A stepped downshift which implements a drive ratio control strategy to provide maximum engine braking, takes the general form shown by the triple arrow A₃. It may meet, exceed or even not reach the next lowest gear ratio, depending on avoidance of an engine over-speed condition. In Figure 3, an example is shown in relation to this embodiment in which the drive ratio control strategy A₃ adopted for the implementation of maximum engine braking goes down past what would be the next lowest gear (3rd gear) but must stop short before it drops down to the gear (2nd) below that because of the rev' limit at 6800 RPM.

The ratio is then varied in such a manner that the maximum engine braking effect at 6800 RPM is substantially constantly maintained until a merging point 3' is reached at which the vehicle speed has been brought down to a level around which vehicle speed and engine speed match a suitable point in the 2nd gear operating characteristic for that characteristic to be adopted/implemented. The vehicle is then decelerated with assistance from engine braking in accordance with the triple arrow A₃.

If, however, the user lifts off gently around the point at which a stepped down-shift has been selected, the release is determined by the controller 20 not to be rapid. This action is detected using the potentiometer 34 and the determination is set at, for example, a rate of release below a predetermined threshold. Under these circumstances, the controller 20 is programmed to assume that the user wants a low level of engine braking on stepping down gears, e.g. on entry to the hybrid mode.

In response to a non-rapid lift-off, the controller 20 next assesses whether the engine 12 is being operated under light fuelling conditions. The vehicle 10 is determined to be operating under light fuelling conditions if, for example, it is not being accelerated and if it is not being held at a steady state cruising speed. Such conditions occur if, for example, the TPS signal indicates that the accelerator has not been fully released but the signal from the vehicle speed transducer 38 indicates that the vehicle 10 is starting to decelerate such that the controller 20 determines that the user is looking for some engine braking as the vehicle 10 must be on overrun. In variation to the invention, it may be preferred to use an overrun detection means (none shown).

If accelerator release was not rapid and if in addition the engine 12 is not operating under light fuelling conditions, then the controller 20 steps the CVT 14 down into the next lowest gear, in accordance with the drive ratio control strategy represented by the double arrow A₂ in similar fashion to operation in the hybrid mode of PCT/GB98/02831.

If the engine 12 is being operated under light fuelling conditions, the controller 12 adopts a light deceleration strategy for controlling the drive ratio. In the example shown in Figure 3, the light fuelling drive ratio control strategy is represented by the quadruple arrow A₄. The drive ratio is varied as necessary such that the engine speed at the instant operating point x is maintained substantially constant while engine braking at that engine speed (e.g. 3000 RPM) brings the vehicle speed down until a point 4' at which the vehicle speed has been brought down to a level around which the vehicle speed matches the 3000 RPM point in the next lowest gear (3rd gear). The 3rd gear characteristic is then adopted at the merging point 4' and is followed from there onwards.

In each case, the drive ratio of the CVT 14 could in response to a stepped down-shift, instead of a single step, be varied in small increments/steps or by a rapid change in the continuous manner.

The arrangement for implementing engine braking provided by this invention is recommended for CVT applications because such applications allow the engine speed to be maintained at a constant level. Control arrangements for automatic transmissions which operate solely between fixed ratios may find it possible to implement the maximum engine braking aspect of this invention if suitably programmed, but might find it more difficult to operate the engine 12 at a substantially fixed speed, as required for the.

## Claims

1. A vehicle (10) comprising an engine (12) coupled to a transmission (14) and a control means (20) arranged during use to change a drive ratio of the transmission in a continuously variable manner and also to change the drive ratio in response to a manually operable drive ratio shift request means (22; DS, US), characterised in that the control means (20) is further arranged during use, in response to a manually requested down-shift (DS), to assess the circumstances under which said down-shift was requested and to implement automatically a drive ratio control strategy in which said drive ratio is controlled such that a level of engine braking is provided which is appropriate to said circumstances.

2. A vehicle (10) according to Claim 1, wherein said drive ratio control strategy is implemented by selection from a plurality of drive ratio control strategies (A₁, A₂, A₃, A₄).

3. A vehicle (10) according to Claim 1 or Claim 2, wherein a said drive ratio control strategy comprises a light deceleration strategy (A₄).

4. A vehicle (10) according to Claim 3, wherein said light deceleration strategy (A₄) includes varying said drive ratio as necessary to hold engine speed substantially constant until vehicle speed has been brought down by engine braking to a point (4') around which vehicle speed and engine speed match a suitable point in a drive ratio operating characteristic of the next lowest gear (3rd gear) for the operating characteristic of that next lowest gear to be implemented.

5. A vehicle according to Claim 3 or Claim 4, wherein said control means (20) is arranged to implement said light deceleration strategy (A₄) when a said stepped down-shift is manually requested if it (20) determines that said engine (12) is under light fuelling conditions and said vehicle (10) is not accelerating and is not being held at a steady state cruising speed.

6. A vehicle according to any one of Claims 3 to 5, wherein said control means (20) is arranged to implement said light deceleration strategy (A₄) when a said stepped down-shift is manually requested if it (20) determines that said engine (12) is under light fuelling conditions and said control means (20) determines whether said engine (12) is operating under light fuelling conditions by monitoring at least one of a manifold absolute pressure transducer (40), an accelerator position transducer (34) and an air flow meter (42) and comparing the monitored reading or readings thereof with light fuelling readings stored in a memory map.

7. A vehicle (10) according to any preceding claim, wherein a said drive ratio control strategy comprises a maximum engine braking strategy (A₃).

8. A vehicle (10) according to Claim 7, wherein said maximum engine braking strategy (A₃) includes varying said drive ratio as necessary to achieve an engine speed which provides a level of engine braking determined to be substantially the maximum which is available and/or safe and/or desired (6800 RPM) and holding that engine speed substantially constant until vehicle speed has been brought down by engine braking to a point (3') around which vehicle speed and engine speed match a suitable point in an operating characteristic of the next lowest gear (2nd gear) for the operating characteristic of that next lowest gear to be implemented.

9. A vehicle (10) according to Claim 7 or Claim 8, wherein said maximum engine braking strategy (A₃) is implemented by increasing said drive ratio in whole steps or increments of steps until a drive ratio is reached which is one such step or increment below a drive ratio at which said engine (12) would exceed a predetermined engine speed limit.

10. A vehicle (10) according to any one of Claim 7 to 9, wherein said maximum engine braking strategy (A₃) is implemented only if said engine (12) is being operated under over-run-fuel-cut-off (ORFCO) conditions.

11. A vehicle (10) according to any preceding claim, wherein an engine braking strategy (A₂, A₃, A₄) is adopted only if at least one of engine speed, vehicle speed or the speed of a drive shaft is above a predetermined threshold, so as to reduce the likelihood of engine stalling if a said manual stepped downshift is carried out.

12. A control system suitable for a vehicle (10) comprising an engine (12) coupled to a transmission (14), and a control means (20) which is arranged during use to change a drive ratio of the transmission in a continuously variable manner and also to change the drive ratio in response to a manually operable drive ratio shift request means (22; DS, US), the system being characterised in that said control means (20) is further arranged during use, in response to a manually requested down-shift (DS), to assess the circumstances under which said down-shift was requested and to implement automatically a drive ratio control strategy in which said drive ratio is controlled such that a level of engine braking is provided which is appropriate to said circumstances.
